# EUROPEAN PATENT SPECIFICATION

(11) **EP 2 422 995 B1**
(45) Date of publication and mention of the grant of the patent: **13.11.2013**
(21) Application number: 11178407.0
(22) Date of filing: 23.08.2011
(51) Int. Cl.: B60B 27/00, F16D 1/076

(54) **Manufacturing method for vehicle hub unit**
Herstellungsverfahren für eine Fahrzeugnabeneinheit
Procédé de fabrication pour unité de moyeu de véhicule

(30) Priority: 30.08.2010 JP 2010192413
(43) Date of publication of application: 29.02.2012
(73) Proprietor: JTEKT CORPORATION, Osaka-shi Osaka 542-8502 (JP)
(72) Inventor: Shirakami, Kentaro, Osaka-shi, Osaka 542-8502 (JP); Ohmi, Hiroyuki, Osaka-shi, Osaka 542-8502 (JP)
(74) Representative: Winter, Brandl, Fürniss, Hübner, Röss, Kaiser, Polte - Partnerschaft

(56) References cited:
- EP-A1- 2 103 451
- DE-A1- 3 636 243
- US-A- 3 616 970
- US-A1- 2002 006 240
- US-A1- 2003 002 763

## Description

### BACKGROUND OF THE INVENTION

### 1. Field of the Invention

The invention relates to a manufacturing method for a vehicle hub unit in which a member that constitutes an inner ring is fixed by clinching to an end portion of a hub spindle of a hub wheel to which a wheel is fitted.

### 2. Description of Related Art

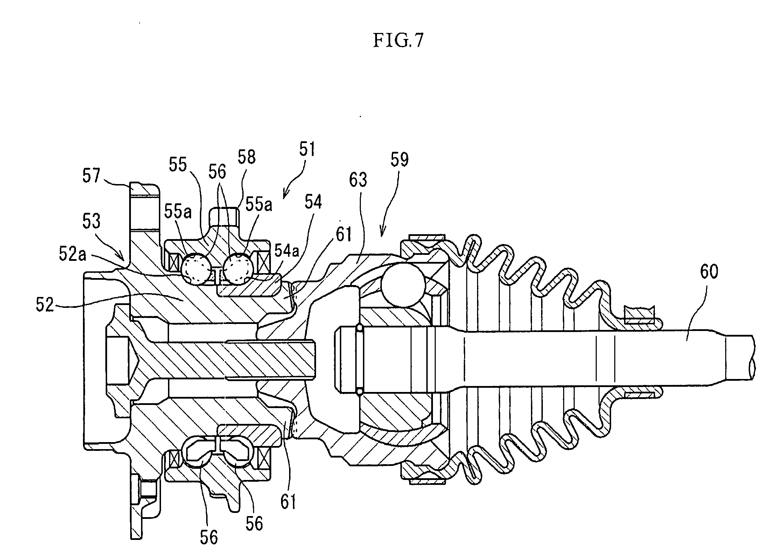

A hub unit is used to support a wheel of an automobile such that the wheel is rotatable with respect to a suspension. FIG. 7 is a sectional view that illustrates an example of an existing hub unit.

A hub unit 51 shown in FIG. 7 includes a hub wheel 53, an inner ring member 54, an outer ring 55, and a plurality of rolling elements 56. The hub wheel 53 has a hub spindle 52. The inner ring member 54 is fixed to one end of the hub spindle 52 by clinching. The outer ring 55 is arranged radially outward of the hub spindle 52. The rolling elements 56 are rollably arranged between one of outer ring raceways 55a of the inner peripheral surface of the outer ring 55, and an inner ring raceway 52a of the outer peripheral surface of the hub spindle 52 or an inner ring raceway 54a of the outer peripheral surface of the inner ring member 54. A flange portion 57 is formed at the end portion (left end portion in FIG. 7) of the hub wheel 53, and a wheel of a tire, a brake disc, and the like (not shown), are fitted to the flange portion 57. A fixing flange 58 is formed on the outer peripheral surface of the outer ring 55. The fixing flange 58 is used to fit the hub unit 51 to a vehicle body-side member (not shown) supported by a suspension of a vehicle.

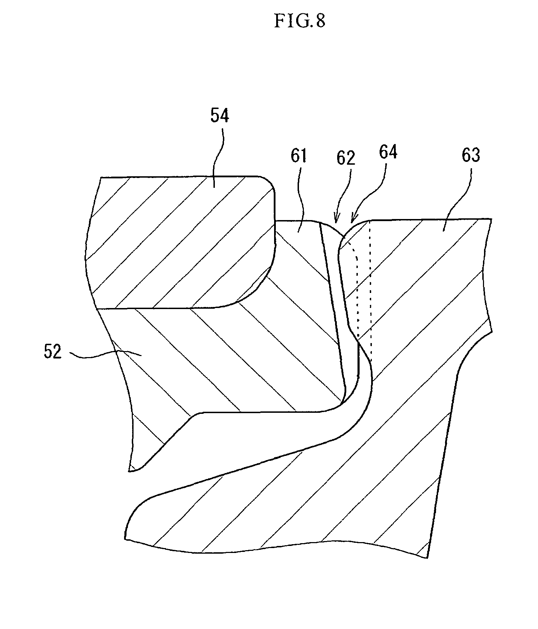

Rotational driving force of a drive shaft 60 is transmitted to the hub unit 51 via a constant velocity joint 59. As one method of transmitting the rotational driving force, there is known a method in which, as shown in FIG. 8 in detail, a spline tooth portion (side face spline) 62 is formed at a clinched portion 61 of the hub spindle end portion for fixing the inner ring member 54, and then the spline tooth portion 62 is meshed with a tooth portion (side face spline) 64 formed at an end surface of the outer ring 63 of the constant velocity joint 59 (see, for example, Published Japanese Translation of PCT Application No. 2008-536737 and Japanese Patent Application Publication No. 2008-174178).

In the hub units described in Published Japanese Translation of PCT Application No. 2008-536737 and Japanese Patent Application Publication No. 2008-174178, rotational driving force is transmitted to the hub unit via a constant velocity joint due to the mesh of the teeth that extend in a direction substantially perpendicular to a rotary shaft.

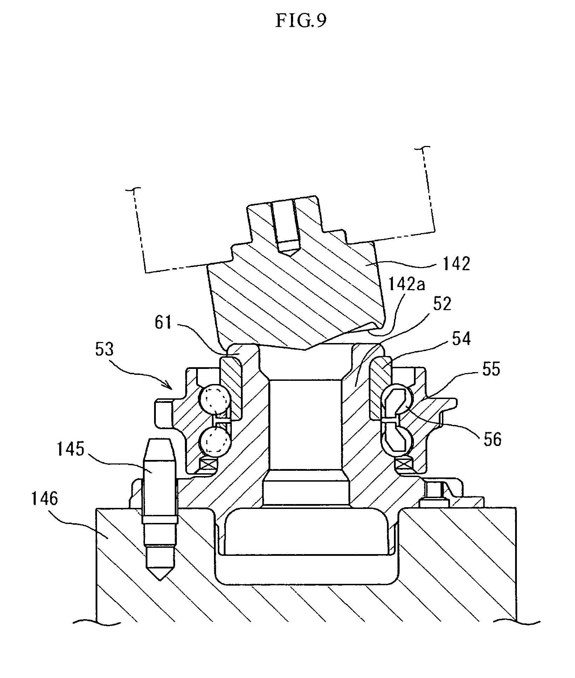

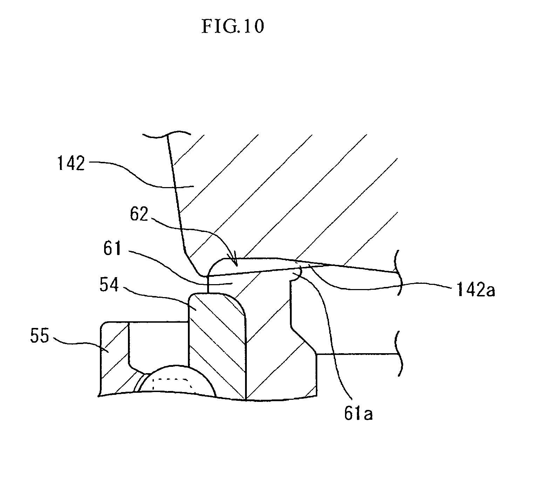

A manufacturing method for the above-described spline tooth portion 62 will be described below with reference to FIG. 9. First, the hub wheel 53 with the inner ring member 54 fitted around the outer periphery of one end of the hub spindle 52 is fixed to a base 146 using knock-pins 145. Subsequently, oscillating clinching is performed to form the spline tooth portion 62 and the clinched portion 61 at the same time. In the oscillating clinching, a punch 142 having a tooth profile 142a for forming the spline tooth portion 62 is pressed against a cylindrical end portion of the hub spindle 52 and the punch 142 is oscillated. FIG. 10 is an enlarged view of a main portion in FIG. 9.

However, an end surface of the existing punch 142 has a conical shape of which the center just slightly protrudes. Therefore, the material of the hub spindle end portion may be deformed toward the radial center of the hub spindle 52 as the oscillating clinching proceeds. If plastic deformation toward the radial center of the hub spindle 52 becomes significant, a portion 61a formed due to deformation toward the radial center of the hub spindle 52 may contact the constant velocity joint when the constant velocity joint is fitted to the hub unit.
From DE 36 36 245 A1 a manufacturing method according to the preamble of claim 1 has become known.

### SUMMARY OF THE INVENTION

It is an object of the invention to provide a manufacturing method for a vehicle hub unit, according to which deformation of an end portion of a hub spindle toward the radial center of the hub spindle during oscillating clinching is prevented to thereby make it possible to avoid contact between the end portion and a constant velocity joint when the constant velocity joint is fitted to the hub unit, wherein the manufacturing method should be improved such that lubricant applied for extending the service life of the punch and for stabilizing the accuracy of the teeth to be formed can be more efficiently used.

This object is achieved by the features of claim 1

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view that illustrates an example of a vehicle hub unit manufactured by a manufacturing method according to an embodiment of the invention;
FIG. 2 is an enlarged view that illustrates an end portion of a clinched portion of the vehicle hub unit shown in FIG. 1;
FIG. 3 is a sectional view for explaining the manufacturing method according to the embodiment of the invention;
FIG. 4 is an enlarged view of a main portion in FIG. 3;
FIG. 5A and FIG. 5B are views that illustrate an example of a punch of a clinching tool;
FIG. 6 is a view for explaining a method of applying lubricant to an end portion of a hub spindle;
FIG. 7 is a sectional view that illustrates an existing vehicle hub unit;
FIG. 8 is an enlarged view that illustrates an end portion of a clinched portion of the vehicle hub unit shown in FIG. 7;
FIG. 9 is a sectional view for explaining an existing manufacturing method; and
FIG. 10 is an enlarged view of a main portion in FIG. 9.

### DETAILED DESCRIPTION OF EMBODIMENTS

Hereinafter, a manufacturing method for a vehicle hub unit according to an embodiment of the invention will be described in detail with reference to the accompanying drawings.

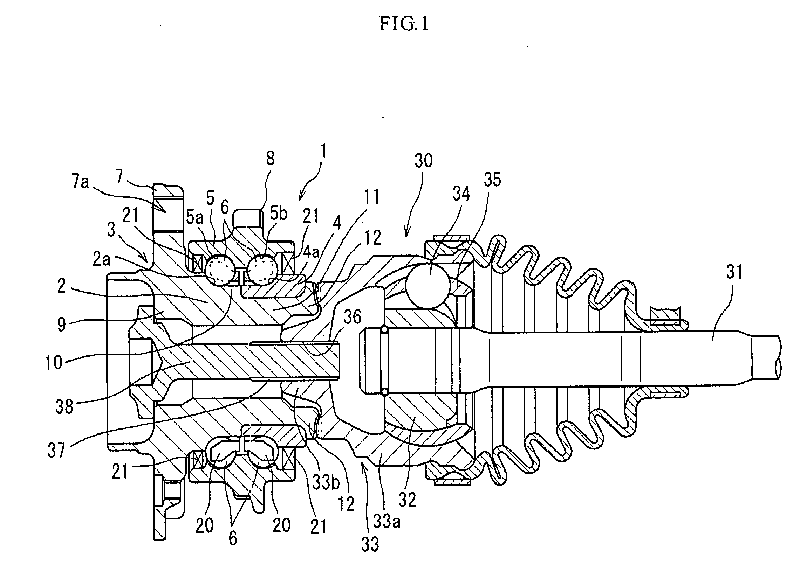

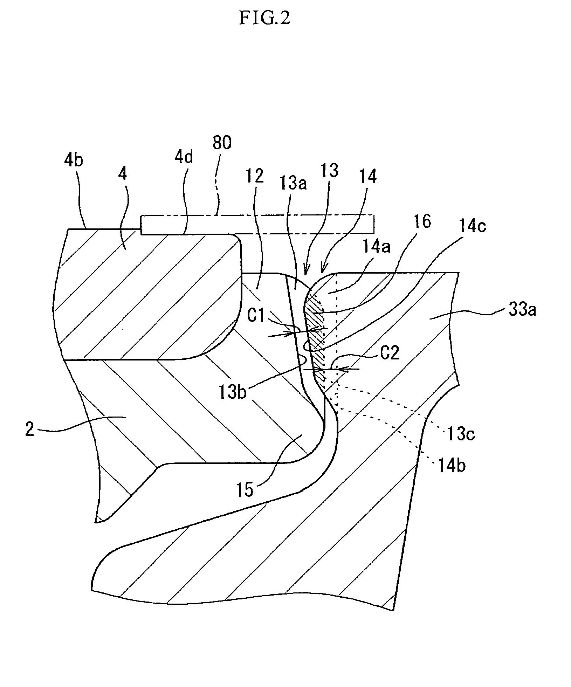

First, the configuration of the vehicle hub unit manufactured by manufacturing method according to the embodiment of the invention will be described. FIG 1 is a sectional view that illustrates an example of the vehicle hub unit 1 manufactured by the manufacturing method according to the embodiment of the invention. FIG. 2 is an enlarged view that illustrates an end portion of a clinched portion of the vehicle hub unit.

The vehicle hub unit 1 supports a wheel of an automobile such that the wheel is rotatable with respect to a suspension. The vehicle hub unit 1 includes a hub wheel 3, an outer ring 5 and a plurality of rolling elements 6. The hub wheel 3 has a cylindrical hub spindle 2. An inner ring member 4 is fixed to one end (right end portion in FIG 1) of the hub spindle 2 by clinching. The outer ring 5 is arranged radially outward of the hub spindle 2. The rolling elements 6 each are rollably arranged between an outer ring raceway 5a of the inner peripheral surface of the outer ring 5 and an inner ring raceway 2a of the outer peripheral surface of the hub spindle 2 or between an outer ring raceway 5b of the inner peripheral surface of the outer ring 5 and an inner ring raceway 4a of the outer peripheral surface of the inner ring member 4. The rolling elements 6 are retained by a cage 20, and arranged at predetermined intervals in the circumferential direction. Seal members 21 are provided in an annular space formed between the outer ring 5 and the hub wheel 3. The seal members 21 close the annular space from both ends of the annular space in the axial direction.

A flange portion 7 is formed at the end portion (left end portion in FIG. 1) of the hub wheel 3. A wheel of a tire, a brake disc, and the like (not shown), are fitted to the flange portion 7 with bolts. In FIG 1, a reference numeral 7a denotes a hole into which a bolt is inserted. A fixing flange 8 is formed on the outer peripheral surface of the outer ring 5. The fixing flange 8 is used to fit the hub unit 1 to a vehicle body-side member (not shown) supported by the suspension of a vehicle.

The hub spindle 2 is a single-piece member that has a large-diameter portion 9 and a small-diameter portion 11. The large-diameter portion 9 is formed at a position near the flange portion 7. The small-diameter portion 11 is smaller in diameter than the large-diameter portion 9, and is formed so as to be contiguous with the large-diameter portion 9 via a step 10. The inner ring raceway 2a is formed in the outer peripheral surface of the large-diameter portion 9. The inner ring raceway 2a corresponds to the outer ring raceway 5a of the outer ring 5.

The inner ring member 4 is fitted onto the outer peripheral surface of the small-diameter portion 11 of the hub spindle 2, and then an end portion of the small-diameter portion 11 is clinched to form a clinched portion 12, as will be described later. In this way, the inner ring member 4 is fixed between the step 10 and the clinched portion 12.

Driving force of a drive shaft 31 is transmitted to the hub unit 1 via a constant velocity joint 30. The constant velocity joint 30 shown in the drawing is a Birfield constant velocity joint. The constant velocity joint 30 includes an inner ring 32, a plurality of balls 34 and a cage 35. The inner ring 32 is joined to one end of the drive shaft 31. The balls 34 are arranged between the inner ring 32 and an outer ring 33 that is arranged radially outward of the inner ring 32. The cage 35 retains the balls 34.

The outer ring 33 of the constant velocity joint 30 has a bowl-shaped outer ring cylindrical portion 33a and an outer ring shaft portion 33b. The outer ring shaft portion 33b extends from a center portion of an end surface of the outer ring cylindrical portion 33a. The outer ring shaft portion 33b has a hole 36 that extends in the axial direction. The inner peripheral surface of the outer ring shaft portion 33b, which defines the hole 36, has an internal thread. The hub unit 1 is connected to the constant velocity joint 30 by a cap bolt 38 that has an external thread 37 at its end portion.

As shown in FIG 2, a spline tooth portion 13 is formed at the end surface of the clinched portion 12 of the end portion of the hub spindle 2. A tooth portion 14 is formed at the end surface of the outer ring cylindrical portion 33a, which faces the clinched portion 12. Owing to the mesh of the spline tooth portion 13 and the tooth portion 14, rotational driving force of the drive shaft 31 is transmitted to the hub unit 1 via the constant velocity joint 30.

The number of teeth 13a of the spline tooth portion 13 is 37, a protruding portion 15 is formed at each bottom 13b between the consecutive teeth 13a. Each protruding portion 15 protrudes toward the tooth portion 14 of the outer ring cylindrical portion 33a that faces the spline tooth portion 13. Each protruding portion 15 is formed at a radially inner portion of the bottom 13b of the spline tooth portion 13. More specifically, each protruding portion 15 is formed at the bottom 13b at a portion substantially radially inward of a meshing portion 16 (hatched portion in FIG. 2) at which the tooth 13a of the spline tooth portion 13 is in mesh with a tooth 14a of the tooth portion 14 of the outer ring cylindrical portion 33a. By forming the protruding portions 15, the stiffness of each of the teeth 13a that constitute the spline tooth portion 13 is increased. Thus, the allowable loading torque for the hub unit 1 is increased.

A predetermined clearance C1 is left between each bottom 13b of the spline tooth portion 13, including the surface of the protruding portion 15, and a top surface 14c of the tooth 14a of the tooth portion 14 of the outer ring cylindrical portion 33a, which faces the bottom 13b. On the other hand, a predetermined clearance C2 is left between a top surface 13c of each tooth 13a of the spline tooth portion 13 and a bottom 14b of the tooth portion 14 of the outer ring cylindrical portion 33a, which faces the top surface 13c.

Both the spline tooth portion 13 and the tooth portion 14 of the outer ring cylindrical portion 33a are formed by closed die forging. The predetermined clearances C1 and C2 are set such that tolerances in closed die forging are absorbed so as not to cause contact between the teeth when the constant velocity joint 30 is fitted to the hub unit 1. Although the clearances C1 and C2 vary depending on the accuracy of closed die forging, the clearances C1 and C2 are usually approximately 0.5 to 1 mm.

A manufacturing method for the vehicle hub unit will be described below. The above-described spline tooth portion 13 is formed together with the clinched portion 12 at the same time by fitting the inner ring member 4 onto the outer peripheral surface of the small-diameter portion 11 of the hub spindle 2 and then subjecting the end portion of the small-diameter portion 11 to closed die forging.

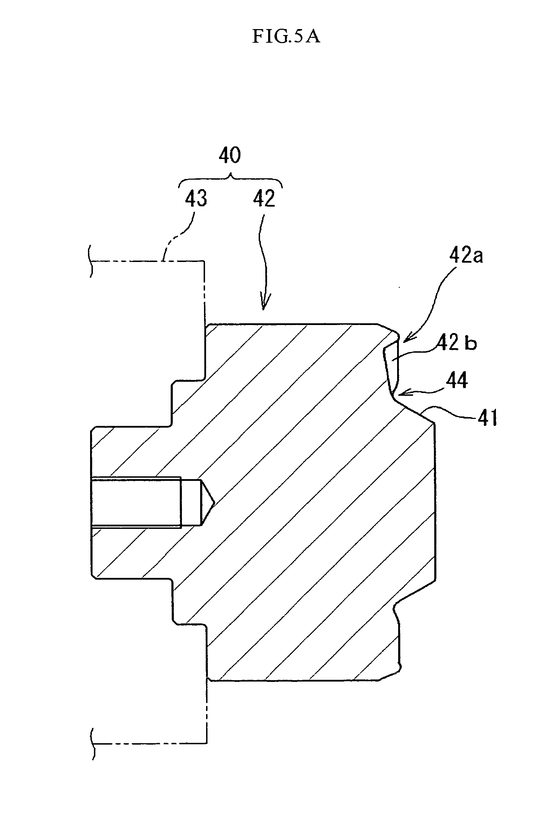

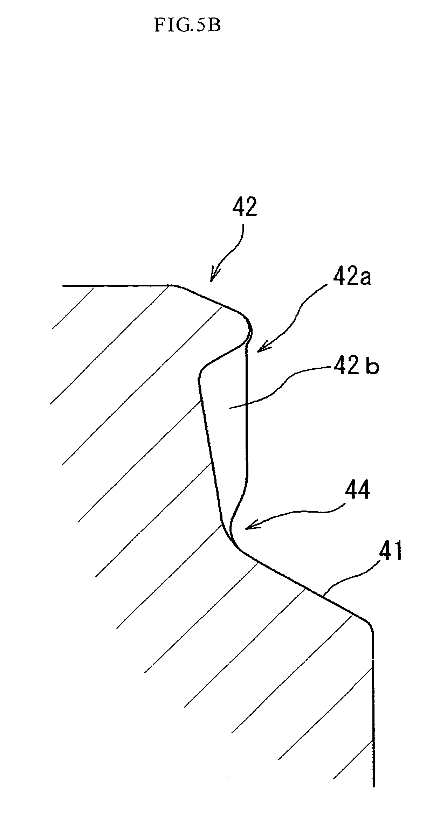

Closed die forging may be performed using a clinching tool. FIG. 5A and FIG. 5B show an example of such a clinching tool 40. The clinching tool 40 includes a punch 42 and an oscillating spindle 43 to which the punch 42 is non-rotatably attached. The punch 42 has a guide portion 41 that is configured to be inserted into the end portion of the small-diameter portion 11 and that is configured to be brought into contact with the end portion with a predetermined inclination angle with respect to the inner peripheral surface of the end portion.

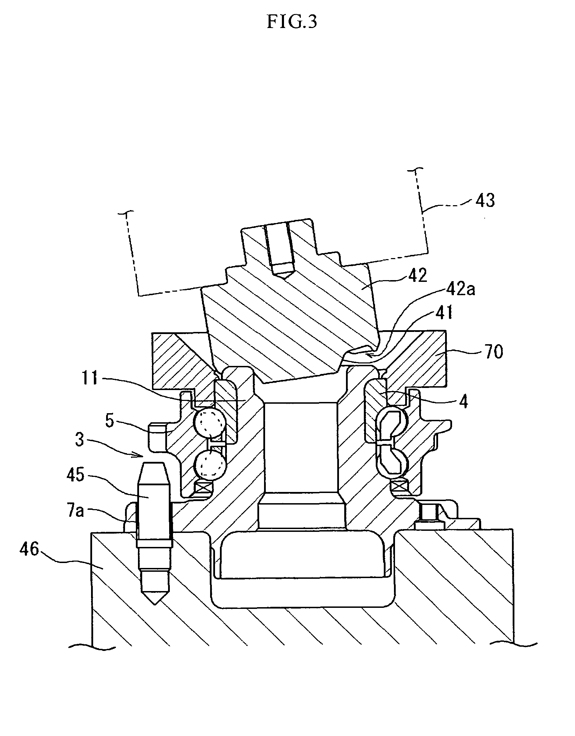

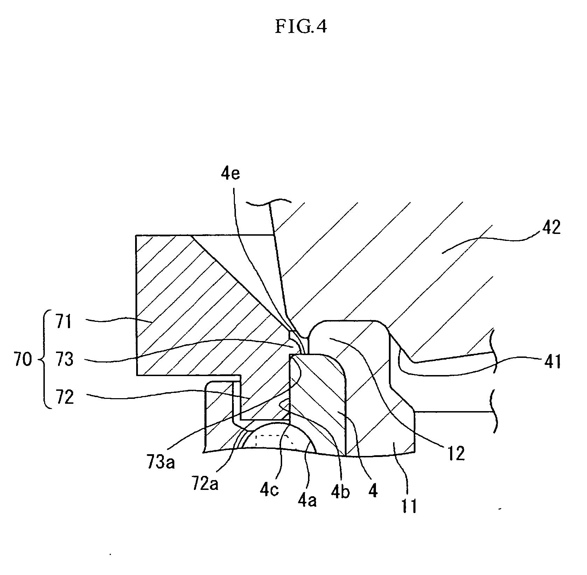

As shown in FIG. 3 and FIG. 4, the hub wheel 3 is placed on a base 46, from which multiple knock-pins 45 extend, such that the outer-side (side close to the outer side of the vehicle when the hub unit 1 is attached to the vehicle) side surface of the flange portion 7 is in contact with the base 46. Then, the knock-pins 45 are inserted into the holes 7a of the flange portion 7 to fix the hub wheel 3 to the base 46.

The guide portion 41 of the punch 42 has a projecting shape that projects from the center portion of one end surface of the punch 42. A tooth profile 42a is formed in the one end surface of the punch 42, at a portion radially outward of the base of the guide portion 41. The tooth profile 42a is used to plastically form the spline tooth portion 13. A recess 44 having a shape corresponding to each protruding portion 15 of the spline tooth portion 13 is formed at a radially inner side portion of each protruding portion 42b of the punch 42, which corresponds to the bottom of the spline tooth portion 13. During closed die forging, the recesses 44 are used to form the protruding portions 15 of the spline tooth portion 13.

When the clinched portion 12 and the spline tooth portion 13 are formed, first, the clinching tool 40 is inserted into the small-diameter portion 11 of the hub spindle 2 of the hub wheel 3. Subsequently, the punch 42 of the clinching tool 40 is pressed against the end portion of the small-diameter portion 11 with predetermined pressing force, and a spindle (not shown) that is coaxial with the hub spindle 2 is rotated to oscillate the clinching tool 40. Through the oscillating clinching, the small-diameter portion 11 is plastically deformed radially outward and the clinched portion 12 is formed, and, at the same time, the spline tooth portion 13 is formed at the end surface of the clinched portion 12 by the tooth profile of the punch 42.

In the embodiment of the invention, the punch 42 has the guide portion 41. The guide portion 41 is configured to contact the end portion of the small-diameter portion 11 with a predetermined angle with respect to the inner peripheral surface of the small-diameter portion 11 of the hub spindle 2. Therefore, plastic deformation of the small-diameter portion 11 toward the radial center of the sub spindle 2 during oscillating clinching is suppressed. Accordingly, the predetermined protruding portions 15 are accurately formed at a radially inner side portion of the spline tooth portion 13. Thus, it is possible to avoid contact between the hub wheel 3 and the constant velocity joint 30 when the constant velocity joint 30 is fitted to the hub unit 1.

In addition, in the present embodiment, an annular restraining member 70 is arranged radially outward of the inner ring member 4. The restraining member 70 is used to prevent the inner ring member 4 from deforming radially outward due to pressure applied from the punch 42 during oscillating clinching. As shown in FIG. 4, the restraining member 70 has an annular body 71, an annular protruding portion 72 and a guide 73. The annular protruding portion 72 axially protrudes from the inner peripheral portion of one end surface of the annular body 71. The guide 73 is formed on the inner peripheral surface of the annular body 71. The annular protruding portion 72 is inserted into an annular space between the outer peripheral surface of the inner ring member 4 fitted around the small-diameter portion 11 of the hub spindle 2 and the inner peripheral surface of the inner-side (side close to the inner side of the vehicle when the hub unit 1 is attached to the vehicle) end portion of the outer ring 5. Then, the length of the inside diameter of the annular protruding portion 72 and annular body 71 is adjusted such that the inner peripheral surface of the annular protruding portion 72 contacts the outer peripheral surface of the inner ring member 4 fitted around the small-diameter portion 11 of the hub spindle 2. In addition, when the restraining member 70 is arranged, the guide 73 contacts the inner-side end surface of the inner ring member 4. Therefore, it is possible to easily determine the position of the restraining member 70 in the up-down direction (axial direction).

When the restraining member 70 is used, the radially outer side portion of the inner ring member 4 close to the inner ring raceway 4a is restrained by the restraining member 70. Therefore, deformation of the inner ring member 4 during clinching is suppressed, and it is possible to prevent occurrence of indentation in the inner ring raceway 4a.

The protrusion height of the annular protruding portion 72 in the axial direction is adjusted to such a height that the inner peripheral surface of the annular protruding portion 72 contacts a portion of the outer peripheral surface of the inner ring member 4, on which the seal member 21 will be arranged. If the protrusion height of the annular protruding portion 72 in the axial direction is adjusted in this way, even when an annular recess 4d is formed in the inner-side end portion of the inner ring member 4 in order to fit an annular dust cover 80 (see FIG. 2) used to prevent entry of dust toward the spline tooth portion 13, the restraining member 70 is arranged so as to cover a portion of the outer peripheral surface (the diameter of this portion of the outer peripheral surface is larger than the diameter of a portion at which the recess is formed) of the inner ring member 4, the portion being further axially inward than the recess 4d in the bearing. Therefore, it is possible to reliably suppress deformation of the inner ring member 4 during clinching.

The protrusion height of the annular protruding portion 72 in the axial direction is set to such a height that a distance of approximately 0.5 mm is ensured between the end surface of the annular protruding portion 72 and an inner ring shoulder portion 4c that is the boundary between the inner ring raceway 4a and outer peripheral surface 4b of the inner ring member 4. Thus, it is possible to prevent contact between the end surface of the annular protruding portion 72 and the rolling elements 6 during oscillating clinching.

When the end portion of the small-diameter portion 11 of the hub spindle 2 is clinched by oscillating clinching and the spline tooth portion 13 is formed at the clinched portion 12, lubricant, for example, lubricating oil, is usually used in order to extend the service life of the punch 42 and to stabilize the accuracy of teeth formed. In this case, lubricating oil may be sprayed onto a lubrication portion, that is, the end portion of the small-diameter portion 11 of the hub spindle 2. However, when the lubricating oil is sprayed, there is a problem that it is difficult to stabilize the amount of applied lubricating oil and, in addition, lubricating oil adheres to portions other than the portion that need lubrication. Then, there is another problem that the number of cleanup works for equipment increases due to the lubricating oil scattering or adhering to the portions other than the portion that needs lubrication.

In contrast to this, in order to spray lubricating oil only to portions that need lubrication, an additional device, such as masking, is required. Therefore, there is yet another problem that not only the equipment becomes complex but also the working process becomes complicated.

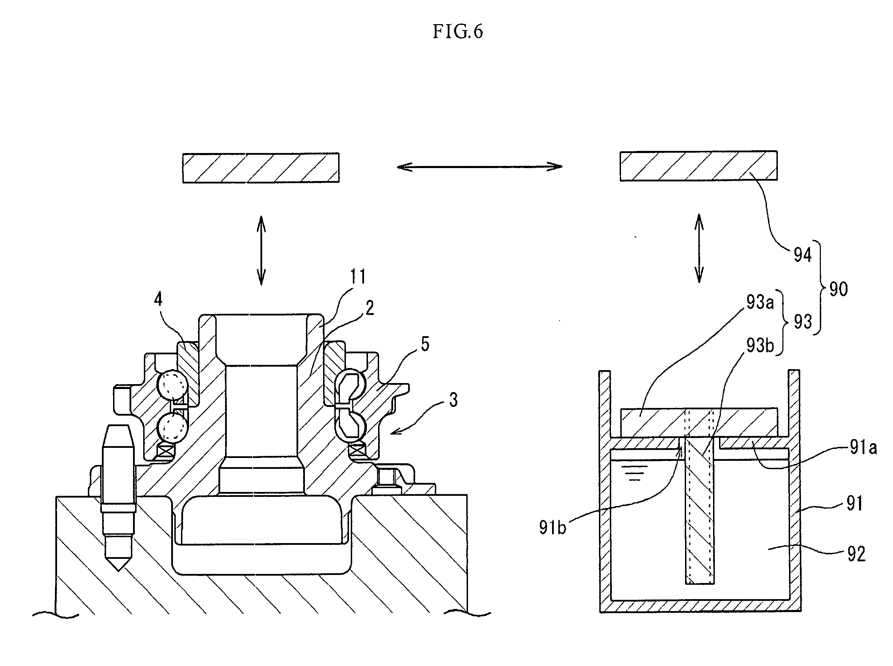

Then, in the present embodiment, as shown in FIG. 6, lubricant is applied to the end portion of the small-diameter portion 11 of the hub spindle 2 with the use of an applicator 90 made of spongy porous material, instead of being sprayed. Thus, the used amount of lubricant is minimized. In addition, lubricant does not scatter to portions around a portion that needs lubrication, unlike the case where lubricant is applied by spraying. Therefore, the number of cleanup works for equipment is reduced.

The applicator 90 is formed of a first applicator 93 and a second applicator 94. The first applicator 93 is immersed in lubricating oil 92 stored in a container 91. The second applicator 94 contacts the first applicator 93 to absorb the lubricating oil.

The first applicator 93 is formed of a disc-shaped body 93a and a cylindrical absorbing portion 93b. The body 93a has a hole at its center. The absorbing portion 93b is inserted into the hole of the body 93a. The body 93a of the first applicator 93 is arranged on the upper surface of a perforated partition panel 91a of the container 91. The absorbing portion 93b extends through the hole 91b of the perforated partition panel 91 a, and is immersed in the lubricating oil 92 in the container 91. The lubricating oil 92 is absorbed by the absorbing portion 93b and spreads all around the body 93a. In this case, because the absorbing portion 93b has a cylindrical shape, it is possible to ensure a large contact area at which the absorbing portion 93b contacts the lubricating oil 92 in the container 91, and the body 93a efficiently absorbs the lubricating oil 92.

When the second applicator 94 is brought into contact with the body 93a, the second applicator 94 absorbs an appropriate amount of lubricating oil. When the second applicator 94 that has absorbed the appropriate amount of lubricating oil is brought into contact with the end portion of the small-diameter portion 11 of the hub spindle 2 in a stamping manner, an optimal amount of lubricating oil is uniformly applied to only forged portions. The second applicator 94 is moved by forming the hole at the center of the second applicator 94, inserting a columnar engaging portion (not shown) of a transferring mechanism into the hole, and moving the transferring mechanism by appropriate driving means.

Note that the stamping application method using the above-described applicator 90 made of spongy porous material is not limited to the case where a spline tooth portion is machined by oscillating clinching, and the application method may also be applied to another general oscillating clinching in which a spline tooth portion is not formed.

The invention is not limited to the above-described embodiment, and various modifications and changes may be made within the scope of the appended claims. For example, in the above-described embodiment, the sectional shape of each protruding portion is a wavy shape. Alternatively, another sectional shape, such as a semi-circular shape and a trapezoidal shape, may be employed. In addition, in the above-described embodiment, there is employed a third-generation structure in which an inner ring raceway is directly formed in the outer periphery of the hub spindle. Alternatively, a first-generation or second-generation structure in which a pair of inner rings is press-fitted onto a hub spindle may be employed. In addition, in the above-described embodiment, the peripheral surface (in the sectional view shown in FIG. 5A and FIG. 5B, the portion shown by the oblique line of a trapezoid) of the guide portion 41 of the punch 42 is a flat surface. Alternatively, the peripheral surface may be formed in a curved surface.

In the manufacturing method according to the invention, the guide portion that projects from the center portion of one end surface of the punch suppresses plastic deformation of the hub spindle end portion toward radial center of the hub spindle during oscillating clinching. Therefore, it is possible to avoid contact between the hub wheel and the constant velocity joint when the constant velocity joint is fitted to the hub unit.

## Claims

1. A manufacturing method for a vehicle hub unit (1) in which a hub wheel (3) is arranged radially inward of an outer ring (5) via rolling elements (6), an inner ring member (4) is fixed to an end portion (11) of a hub spindle (2) of the hub wheel by clinching, a spline tooth portion (13) that meshes with a tooth portion (16) of a constant velocity joint (30) that transmits driving force to the hub unit (1) is formed at a clinched portion (12) of the hub spindle (2), and a protruding portion (15) is formed at a radially inner side portion of a bottom of the spline tooth portion (13), wherein:
the clinched portion (12) is formed by plastically deforming a cylindrical end portion (11) of the hub spindle (2) outward with a clinching tool (40);
the clinching tool includes a punch (42) that is configured to be inserted into the cylindrical end portion (11) said punch (42) has a guide portion (41) that is configured to contact the cylindrical end portion (11) with a predetermined inclination angle with respect to an inner peripheral surface of the end portion, and an oscillating spindle (43) to which the punch (42) is non-rotatably attached;
the guide portion (41) is formed in a projecting shape so as to project from a center portion of one end surface of the punch (42);
a tooth profile (42a) for plastically machining the spline tooth portion is formed in the one end surface of the punch (42), at a portion radially outward of a base of the guide portion (41); and
the guide portion (41) of the punch (42) is inserted into the end portion (11) of the hub spindle (2), the punch is pressed against the end portion of the hub spindle with predetermined pressing force, and a spindle (43) that is coaxial with the hub spindle (2) is rotated to oscillate the clinching tool (40), so that the clinched portion (12) and the spline tooth portion (13) are formed at the same time through plastic deformation while plastic deformation of the end portion (11) of the hub spindle (2) toward a radial center of the hub spindle is suppressed by the guide portion (11), **characterized in that**
an applicator (90) made of spongy porous material is used to apply lubricant in advance to the end portion (11) of the hub spindle (2), the end portion being subjected to oscillating clinching.

2. The manufacturing method for a vehicle hub unit according to claim 1, wherein
a restraining member (70) that prevents the inner ring member (4) from deforming radially outward during oscillating clinching is arranged radially outward of the inner ring member (4) so as to be in contact with the inner ring member (4).

3. The manufacturing method for a vehicle hub unit according to claim 2, wherein
a seal member (21) is arranged between an inner peripheral surface of the outer ring (5) and an outer peripheral surface of the inner ring member (4), and the restraining member (70) is arranged so as to be in contact with a portion of the outer peripheral surface of the inner ring member (4), at which the seal member (21) is arranged.

4. The manufacturing method for a vehicle hub unit according to claim 2 or 3, wherein the restraining member (70) is formed of an annular member (71), and has a guide (73) on an inner peripheral surface of the restraining member (70), the guide (73) protruding radially inward, and
the guide (73) contacts an end surface of the inner ring member (4) to determine a position of the restraining member (70) in an axial direction of the restraining member.

## Patentansprüche

1. Herstellungsverfahren für eine Fahrzeug-Nabeneinheit (1), bei der ein Nabenrad (3) radial innerhalb eines Außenrings (5) über Wälzkörper (6) angeordnet ist, ein Innenringteil (4) an einem Endabschnitt (11) einer Nabenspindel (2) des Nabenrads durch Stauchen bzw. Umbördeln befestigt ist, ein Keilzahnabschnitt (13), der mit einem Zahnabschnitt (16) eines eine Antriebskraft auf die Nabeneinheit (1) übertragenden Konstantgeschwindigkeitsgelenks (constant velocity joint 30) im Eingriff steht, an einem umgebördelten Abschnitt (12) der Nabenspindel (2) ausgebildet ist, und ein vorstehender Abschnitt (15) an einem radial inneren Seitenabschnitt eines Bodens des Keilzahnabschnitts (13) ausgebildet ist, wobei:
der umgebördelte Abschnitt (12) durch plastisches Verformen eines zylinderförmigen Endabschnitts (11) der Nabenspindel (2) nach außen mittels eines Stauch- und Umbördelungswerkzeugs (40) ausgebildet wird,
das Umbördelungswerkzeug einen Stempel (42), der dazu ausgebildet ist, in den zylinderförmigen Endabschnitt (11) eingesetzt zu werden, welcher Stempel (42) einen Führungsabschnitt (41) aufweist, der dazu ausgebildet ist, den zylinderförmigen Endabschnitt (11) mit einem vorbestimmten Neigungswinkel bezüglich einer Innenumfangsoberfläche des Endabschnitts zu berühren, und eine oszillierende Spindel (43) aufweist, an der der Stempel (42) nicht-drehbar befestigt ist,
der Führungsabschnitt (41) in einer vorspringenden Form so ausgebildet ist, dass er von einem Mittenabschnitt einer Endoberfläche des Stempels (42) vorspringt,
ein Zahnprofil (42a) zum plastischen Bearbeiten des Keilzahnabschnitts in der einen Endoberfläche des Stempels (42) in einem Abschnitt radial außerhalb einer Basis des Führungsabschnitts (41) ausgebildet ist, und
der Führungsabschnitt (41) des Stempels (42) in den Endabschnitt (11) der Nabenspindel (2) eingesetzt ist, der Stempel mit einer vorbestimmten Andruckkraft gegen den Endabschnitt der Nabenspindel gepresst wird, und eine Spindel (43), die koaxial mit der Nabenspindel (2) ist, gedreht wird, um das Einrastwerkzeug (40) so zu oszillieren, dass der eingerastete Abschnitt (12) und der Keilzahnabschnitt (13) gleichzeitig durch plastisches Verformen ausgebildet werden, während ein plastisches Verformen des Endabschnitts (11) der Nabenspindel (2) in Richtung einer radialen Mitte der Nabenspindel durch den Führungsabschnitt (11) unterbunden wird, **dadurch gekennzeichnet, dass**
ein aus einem schwammartigen, porösen Material hergestellter Applikator (90) verwendet wird, um ein Gleitmittel auf den Endabschnitt (11) der Nabenspindel (2) im Voraus aufzutragen, wobei der Endabschnitt einem oszillierenden Verstemmen bzw. Umbördeln ausgesetzt wird.

2. Herstellungsverfahren für eine Fahrzeug-Nabeneinheit nach Anspruch 1, wobei ein Zurückhalteteil (70), welches das Innenringteil (4) daran hindert, sich während des oszillierenden Verstemmens bzw. Umbördelns radial nach außen zu verformen, radial außerhalb des Innenringteils (4) so angeordnet ist, dass es mit dem Innenringteil (4) in Berührung ist.

3. Herstellungsverfahren für eine Fahrzeug-Nabeneinheit nach Anspruch 2, wobei ein Dichtungsteil (21) zwischen einer Innenumfangsoberfläche des Außenrings (5) und einer Außenumfangsoberfläche des Innenringteils (4) angeordnet ist, und das Zurückhalteteil (70) so angeordnet ist, dass es mit einem Teil der Außenumfangsoberfläche des Innenringteils (4), an der das Dichtungsteil (21) angeordnet ist, in Berührung ist.

4. Herstellungsverfahren für eine Fahrzeug-Nabeneinheit nach Anspruch 2 oder 3, wobei
das Zurückhalteteil (70) aus einem ringförmigen Teil (71) ausgebildet ist und auf einer Innenumfangsoberfläche des Zurückhalteteils (70) eine Führung (73) aufweist, welche radial nach innen vorspringt, und
die Führung (73) eine Endoberfläche des Innenringteils (4) berührt, um eine Position des Zurückhalteteils (70) in einer axialen Richtung des Zurückhalteteils zu bestimmen.

## Revendications

1. Procédé de fabrication pour une unité de moyeu de véhicule (1) dans lequel une roue de moyeu (3) est agencée radialement à l'intérieur d'une bague extérieure (5) via des éléments roulants (6), un élément de bague intérieure (4) est fixé sur une partie d'extrémité (11) d'une fusée de moyeu (2) de la roue de moyeu par sertissage, une partie à denture cannelée (13) qui coopère avec une partie dentée (16) d'un joint homocinétique (30) qui transmet une force d'entraînement à l'unité de moyeu (1) est formée en une partie sertie (12) de la fusée de moyeu (2), et une partie saillante (15) est formée en une partie latérale radialement intérieure d'un fond de la partie à denture cannelée (13), dans lequel :
la partie sertie (12) est formée en déformant plastiquement une partie d'extrémité cylindrique (11) de la fusée de moyeu (2) vers l'extérieur avec un outil de sertissage (40) ;
l'outil de sertissage inclut un poinçon (42) qui est configuré pour être inséré dans la partie d'extrémité (11) cylindrique, ledit poinçon (42) comporte une partie de guidage (41) qui est configurée pour entrer en contact avec la partie d'extrémité (11) cylindrique avec un angle d'inclinaison prédéterminé par rapport à une surface périphérique intérieure de la partie d'extrémité, et une fusée oscillante (43) sur laquelle le poinçon (42) est fixé de manière non rotative ;
la partie de guidage (41) est formée en une forme saillante de façon à faire saillie depuis une partie centrale d'une surface d'extrémité du poinçon (42) ;
un profil denté (42a) pour usiner plastiquement la partie à denture cannelée est formé dans la une surface d'extrémité du poinçon (42), en une partie radialement vers l'extérieur d'une base de la partie de guidage (41) ; et
la partie de guidage (41) du poinçon (42) est insérée dans la partie d'extrémité (11) de la fusée de moyeu (2), le poinçon est pressé contre la partie d'extrémité de la fusée de moyeu avec une force de pression prédéterminée, et une fusée (43) qui est coaxiale avec la fusée de moyeu (2) est mise en rotation pour faire osciller l'outil de sertissage (40), de telle manière que la partie sertie (12) et la partie à denture cannelée (13) sont formées en même temps par déformation plastique alors que la déformation plastique de la partie d'extrémité (11) de la fusée de moyeu (2) vers un centre radial de la fusée de moyeu est annulée par la partie de guidage (11), **caractérisé en ce que**
un applicateur (90) fait de matériau poreux spongieux est utilisé pour appliquer du lubrifiant à l'avance sur la partie d'extrémité (11) de la fusée de moyeu (2), la partie d'extrémité étant soumise à un sertissage oscillant.

2. Procédé de fabrication d'une unité de moyeu de véhicule selon la revendication 1, dans lequel
un élément de retenue (70) qui empêche l'élément de bague intérieure (4) de se déformer radialement vers l'extérieur pendant le sertissage oscillant est agencé radialement à l'extérieur de l'élément de bague intérieure (4) de façon à être en contact avec l'élément de bague intérieure (4).

3. Procédé de fabrication d'une unité de moyeu de véhicule selon la revendication 2, dans lequel
un élément d'étanchéité (21) est agencé entre une surface périphérique intérieure de la bague extérieure (5) et une surface périphérique extérieure de l'élément de bague intérieure (4), et l'élément de retenue (70) est agencé de façon à être en contact avec une partie de la surface périphérique extérieure de l'élément de bague intérieure (4), au niveau de laquelle l'élément d'étanchéité (21) est agencé.

4. Procédé de fabrication d'une unité de moyeu de véhicule selon la revendication 2 ou 3, dans lequel
l'élément de retenue (70) est formé d'un élément annulaire (71), et comporte un guide (73) sur une surface périphérique intérieure de l'élément de retenue (70), le guide (73) faisant saillie radialement vers l'intérieur, et
le guide (73) entre en contact avec une surface d'extrémité de l'élément de bague intérieure (4) pour déterminer une position de l'élément de retenue (70) dans une direction axiale de l'élément de retenue.
